(19) Europäisches Patentamt
European Patent Office
Office européen des brevets

(11) **EP 3 121 982 A1**

(12) **EUROPEAN PATENT APPLICATION**

(43) Date of publication:
**25.01.2017 Bulletin 2017/04**

(51) Int Cl.:
**H04L 1/00** *(2006.01)*    *H04L 1/14* *(2006.01)*
**H04L 1/18** *(2006.01)*

(21) Application number: **16161286.6**

(22) Date of filing: **18.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.07.2015 GB 201513122**

(71) Applicant: **FUJITSU LIMITED**
**Kawasaki-shi,**
**Kanagawa 211-8588 (JP)**

(72) Inventor: **MOULSLEY, Timothy**
**Caterham, Surrey CR3 5EE (GB)**

(74) Representative: **Stebbing, Timothy Charles**
**Haseltine Lake LLP**
**Lincoln House, 5th Floor**
**300 High Holborn**
**London WC1V 7JH (GB)**

(54) **CONTROL MESSAGES IN WIRELESS COMMUNICATION**

(57) In LTE TDD with CA, a two bit sequence number or downlink assignment indicator (DAI) can be attached to downlink control information (DCI) messages relating to packets transmitted on some or all of successive carrier frequencies in a given subframe. The sequence number is incremented or decremented for each DCI transmitted depending on whether the total number of DCI message transmitted in a given subframe is even or odd. This allows detection of the loss of any three successive DCI (not including the last DCI). The specific improvement over the prior art is that the loss of the last DCI in the sequence can also be detected without adding any more bits. This allows a more accurate and reliable common understanding between the transmitter and receiver concerning the number of DC messages transmitted. This is useful, for example, if the format of transmission of ACK/NACK information relating to the DCI messages depends on the number of messages transmitted, since the most likely cases of failed detection of a DCI message can be detected and corrected.

S100
Schedule DL for UE on multiple CCs
|
S102
Determine total number of DCI to send to UE
|
S104
Calculate sequence numbers for each DCI, based on total number
|
S106
Attach sequence numbers to DCI and transmit to UE

FIG. 4

EP 3 121 982 A1

**Description**

**Field of the Invention**

The present invention relates to wireless communication methods, for example in systems based on the 3GPP Long Term Evolution (LTE) and 3GPP LTE-A groups of standards, and more particularly to mechanisms by which terminals can be prevented from responding erroneously to control messages.

**Background of the Invention**

Wireless communication systems are widely known in which base stations (BSs) form "cells" and communicate with terminals (also called user equipments (UEs) or mobile stations) within range of the BSs.

In such a system, each BS divides its available bandwidth, i.e. frequency and time resources in a given cell, into individual resource allocations for the user equipments which it serves. The UEs are generally mobile and therefore may move among the cells, prompting a need for handovers of radio communication links between the base stations of adjacent cells. A UE may be in range of (i.e. able to detect signals from) several cells at the same time. In the simplest case, using LTE as an example, the UE communicates with one "serving" or "primary" cell (PCell), relying exclusively on this PCell for time and frequency resources needed for wireless communication. However, to increase the resources available to the UE, it can be configured to communicate both with the PCell and with one or more secondary cells (Scells). The Scells may be provided at different carrier frequencies than the PCell, using carrier aggregation (see below).

When a UE starts to use a given cell for its communication, that cell is said to be "activated" for that UE, whether or not the cell is already in use by any other UEs. The set of cells which may be activated (or deactivated) for a UE is configured by the system. Normally, all the cells will need to be managed by a local controlling node (or by multiple such nodes in close co-operation), such as an enhanced NodeB (eNB) in LTE.

Carrier Aggregation (CA)

Techniques for increasing the resources available to UEs include so-called Carrier Aggregation (CA) which has been introduced into 3GPP since LTE Release 10 (incidentally, LTE Release 10 and higher are also referred to as LTE-Advanced, LTE-A). Details of CA as applied to LTE are given in the 3GPP standard TS36.300, hereby incorporated by reference. In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities. The terms "CC" and "carrier" are henceforth used interchangeably.

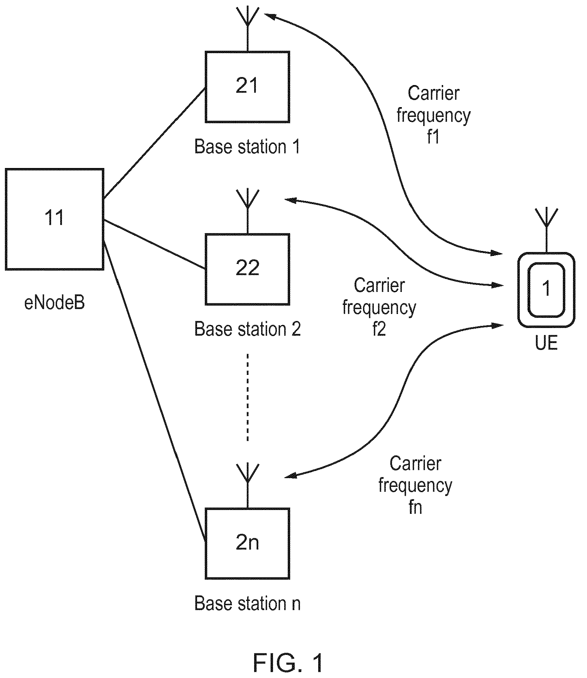

Figure 1 shows an example of a known LTE system (also applicable to the embodiments of the present invention to be described) in which a UE 1 uses carrier aggregation, with an eNB 11 controlling cells at carrier frequencies f1, f2......fn. In this case each cell is shown as supported by a different base station 21, 22, ... 2n, with time division duplex (TDD) operation where uplinks and downlinks for each cell are at the same frequency. The base stations here are all controlled by one eNB. Other deployment options include the case where all the cells are supported by a single base station which may be co-located with, or included as part of, an eNB. Below, the term "base station equipment" is used to denote an eNB with or without separate base stations under its control, as well as the above mentioned single base station, and the equivalent apparatus in non-LTE systems.

Generally, one CC corresponds to one cell, and like a cell, each CC used for communication by a UE is "activated" for that UE. Scells may be activated or deactivated but the PCell may not be deactivated. As mentioned previously, it should be noted that there is a distinction between "activated" and "configured" CCs. A CC may be configured for a UE but is not necessarily activated at any given time. The number of activated CCs can be adapted to the demands of the UE, but only on timescales of tens or hundreds of subframes. Changes in the CCs configured for a UE occur on an even longer timescale.

In frequency division duplex (FDD) operation, the Pcell has a corresponding downlink carrier and an uplink carrier at different frequencies. These could be described as Downlink Primary Component Carrier (DL PCC) and Uplink Primary Component Carrier (UL PCC) respectively. An Scell has a downlink carrier and may also have an uplink carrier. Incidentally, although different carrier frequencies always imply different cells, the reverse is not necessarily the case: a single carrier frequency can support one or more cells.

Therefore, a UE using CA may have a plurality of serving cells, one for each CC, and as well as possibly having different carrier frequencies as illustrated in Figure 1, the cells may have different bandwidths. Generally, each cell is provided by base station antennas at a single site, but this does not exclude the possibility of one cell being provided by antennas at different sites.

Frame Structure

In a wireless communication system such as LTE, data for transmission on the downlink is organised in OFDMA frames each divided into a number of sub-frames. Various frame types are possible and differ between FDD and TDD for example. In a generic frame structure for LTE, a frame of duration 10 ms is divided into 20 equally sized slots of 0.5 ms. A sub-frame (or transmission time interval) consists of two consecutive slots, so one radio frame contains 10 sub-frames.

For each subframe, a new scheduling decision is taken regarding which UEs are assigned to which time/frequency resources during the subframe. Scheduling decisions are taken at the eNB, using a scheduling algorithm which takes into account the radio link quality situation of different UEs, the overall interference situation, Quality of Service requirements, service priorities, etc. The eNB notifies each UE of its scheduling decision by sending control messages including so-called downlink control information (DCI) as explained below.

Channels

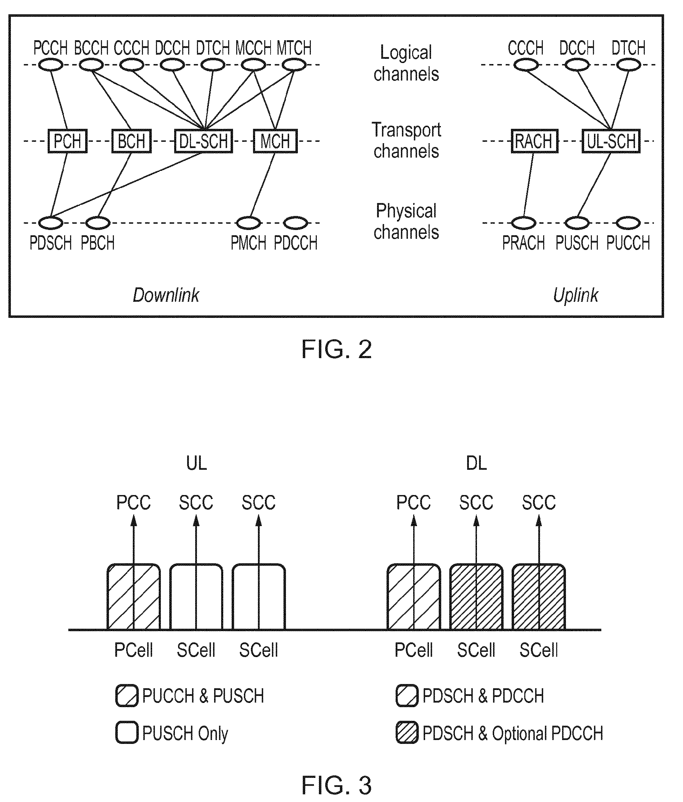

In LTE, several channels for data and control signalling are defined at various levels of abstraction within the system. Figure 2 shows some of the channels defined in LTE at each of a logical level, transport layer level and physical layer level, and the mappings between them. For present purposes, the channels at the physical layer level are of most interest.

On the downlink, user data is carried on the Physical Downlink Shared Channel (PDSCH). There are various control channels on the downlink, which carry signalling for various purposes including so-called Radio Resource Control (RRC), a protocol used as part of radio resource management, RRM. Higher layer signalling in the downlink, such as RRC, is typically carried on the PDSCH. Downlink physical layer signalling is carried by Physical Downlink Control Channel (PDCCH) or Enhanced PDCCH (EPDCCH) (see below).

Meanwhile, on the uplink, user data and also some signalling data is carried on the Physical Uplink Shared Channel (PUSCH). By means of frequency hopping on PUSCH, frequency diversity effects can be exploited and interference averaged out. The control channels include a Physical Uplink Control Channel, PUCCH, used to carry signalling from UEs including channel state information (CSI), as represented for example by channel quality indication (CQI) reports, and scheduling requests. If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers.

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH (or may be sent on PUSCH along with user data). It will be noted that the purpose of the ACK/NACK is to inform the eNB whether each packet (transport block) has been received by the UE. Of course, reception of a packet usually also implies reception of the contents of the packet, including various control messages such as DCI. The conventional reporting procedure for ACK/NACK is defined in 3GPP TS36.213, also incorporated by reference.

Generally speaking, the above mentioned channels may each be transmitted on a per-subframe basis; that is they may occur in some or all subframes and may carry different signalling data in each subframe in which they are transmitted.

PDCCH and DCI

In LTE, both the DL and UL are fully scheduled since the DL and UL traffic channels are dynamically shared channels. This means that PDCCH typically provides control messages including scheduling information to indicate which users should decode the physical DL shared channel (PDSCH) in each sub-frame and which users are allowed to transmit on the physical UL shared channel (PUSCH) in each sub-frame. In particular PDCCH is used to carry the above mentioned downlink control information (DCI) from eNBs to individual UEs. Conventionally, one PDCCH message (an example of a "control message" referred to later) contains one item of DCI (referred to below as "one DCI" for convenience). Each DCI refers to a specific CC activated for the UE, and the UE can determine which CC the DCI refers to either implicitly from the CC on which the DCI is sent, or explicitly by signalling bits within the DCI.

This DCI is often intended for one individual UE, but some messages are also broadcast (e.g. intended for multiple UEs within a cell). Thus PDCCH can also contain information intended for a group of UEs, such as Transmit Power Control (TPC) commands. In addition the PDCCH can be used to configure a semi-persistent schedule (SPS), where the same resources are available on a periodic basis. Below, the terms PDCCH, PDCCH message, DCI and DCI message are used interchangeably unless the context demands otherwise.

Thus, DCI is one important type of content of a "control message" referred to below. The term control message is used to denote control signalling to a UE whether carried on PDCCH or in other ways (e.g. via EPDCCH mentioned below, which has many similarities with PDCCH and for which much of the explanation on PDCCH also applies).

A cyclic redundancy check (CRC) is used for error detection of the DCI. The entire PDCCH payload (including any other bits such as padding) is used to calculate a set of CRC parity bits, which are then appended to the end of the PDCCH payload. As multiple PDCCHs relevant to different UEs can be present in one sub-frame, the CRC is also used to specify which UE a given PDCCH is relevant to. This is done by scrambling the CRC parity bits with a Radio Network Temporary Identifier (RNTI) of the UE. Various kinds of RNTI are defined in LTE. As one example, the C-RNTI is used by a given UE while it is in a particular cell, after it has successfully joined the network by performing a network access procedure with that cell.

Thus a UE could consider DCI message to have been successfully detected if the CRC for the corresponding PDCCH codeword is correct, taking into account scrambling by the appropriate RNTI. It should be noted that there may be additional methods for a UE to determine whether a DCI message has been correctly or incorrectly received, and correspondingly whether it should be considered as "detected" or otherwise. For example, if a DL assignment is received for a carrier which is not activated, this DCI should be considered as incorrectly received, and discard it. A given PDCCH may be transmitted in any one of a number of given locations (which is a search space comprising a predetermined subset of all the possible locations). The UE attempts blind decoding of the PDCCH in each possible location within the search space.

Each different type of message is conveyed using a different DCI format. Many PDCCH messages are each intended to be received by only one specific UE, others are intended for more than one UE. The size of the DCI depends on a number of factors, and thus it is necessary that the UE is aware of the size of the DCI, either by RRC configuration or by another means to signal the number of symbols occupied by PDCCH. Since, as already mentioned, multiple UEs can be scheduled within the same sub-frame, conventionally therefore multiple DCI messages are sent using multiple PDCCHs.

The format to be used depends on the purpose of the control message. For example, DCI format 1 is used for the assignment of a downlink shared channel resource when no spatial multiplexing is used (i.e. the scheduling information is provided for one code word transmitted using one spatial layer only). The information provided enables the UE to identify the resources, where to receive the PDSCH in that sub-frame, and how to decode it. This kind of DCI is referred to below as a "DL assignment" and is of particular relevance to the present invention. Besides the resource block assignment, this also includes information on the modulation and coding scheme and information relevant to the hybrid ARQ protocol used to manage retransmission of non-received data. Another type of DCI is an uplink grant, which gives the UE permission to transmit on the uplink using PUSCH.

EPDCCH

A new control channel design (EPDCCH) is provided in LTE-A, which transmits DCI messages using resources in a similar way to downlink data (i.e. like PDSCH). EPDCCH may be transmitted in either a frequency-localized or a frequency-distributed manner depending on the requirements of the system. Localized transmission would be appropriate if the channel /interference properties are frequency selective, in which case it may be possible to transmit DCI messages in a favourable location in the frequency domain for a given UE. In other cases, for example if no frequency selective channel information is available at the eNB, distributed transmission (corresponding to the manner of transmission of PDCCH) would be appropriate.

The design for distributed EPDCCH is in many respects similar to PDCCH i.e. some resources are configured for distributed EPDCCH, the UE has a blind decoding search space within those resources, and a given DCI message will use a set of resources with a given spread across the frequency domain.

Channels in CA

Having outlined some of the more important channels defined in LTE, their relationship to cells/CCs in the CA scenario can now be described using Figure 3.

As shown in Figure 3, the PCell (DL PCC) can transmit PDCCH to a UE. An SCell may (or may not) provide PDCCH to a UE on the corresponding DL SCC, depending on UE capabilities; however, uplink data on PUSCH can be transmitted by a UE having the required capabilities, on both PCell and SCell. Correspondingly there is a separate transport channel UL-SCH for each cell. For LTE up to and including Release 11 the uplink control channel (PUCCH) is only transmitted on the PCell (UL PCC). Similarly, PRACH for scheduling requests is only transmitted on the PCell. However, these restrictions may not apply in future Releases.

If an SCell is not configured to carry PDCCH for a UE, this implies that the scheduling information for that cell has to be carried in PDCCH of another cell (usually the PCell) - so called cross-carrier scheduling. The PCell and SCells should have identical or very similar transmission timing which allows, for example, PDCCH on one cell to schedule resources on a different cell, and ACK/NACKS for PDSCH transmissions on SCells to be sent on the PCell. SCells may have slightly different transmission timing at the UE in order to allow for the possibility that the cells are supported by antennas at different geographical sites. Because of the tight timing synchronization requirements between PUCCH on the PCell and PDSCH on the SCells, PCells and SCells can be assumed to be controlled by the same eNB.

Downlink Assignment Index (DAI)

CA can be configured for both FDD (where at least the Pcell has a downlink and uplink on different carrier frequencies, but an Scell may have only downlink or only uplink in use) and TDD (where uplink and downlink for an PCell, or Scell, are on the same carrier frequency). In LTE TDD the ACK/NACKS for codewords received in more than one subframe can be sent in the same uplink message (and thus within a single subframe). This means that there could be more ACK/NACKs to send in one subframe than the total number of bits, which is fixed in accordance with the number of CCs configured for the UE.

In such cases, a so-called downlink assignment index (DAI) may be used for "bundling" of ACK/NACKS, where a given ACK/NACK bit is used to indicate correct reception (or otherwise) of multiple codewords, and thereby of any DCI (for example) contained in those codewords. The UE and eNB have a common understanding of how this bundling is performed, so that the eNB knows which transport blocks (and corresponding DCI) are being acknowledged by each bit. Conventionally, the bundling is performed in a manner allowing ACK/NACK for all configured CCs, regardless of which CCs are actually in use. It will be noted that for this bundling procedure to be useful, the probability of incorrect reception of data packets on PDSCH must be sufficiently low (e.g. 10% or less).

In TDD the DL assignments (DCI) for a CC typically contain a 2 bit DAI field (see 3GPP TS 36.213, section 7.3.2.1, TDD HARQ-ACK reporting procedure for same UL/DL configuration) which is incremented per successive DCI transmitted for that CC. This incrementing of the DAI helps the UE detect whether any DCIs have been missed (i.e. if the DAI field for a given DCI has been incremented by more than the expected amount compared with the previous DCI message for that carrier, then the UE can deduce that at least one intervening DCI message has been lost, or some other kind of error has occurred). If the UE detects a DCI with an out-of-order DAI, the UE knows that at least one DCI message has been lost, or a DCI message has been falsely detected; this enables the UE to discard the corresponding ACK/NACK transmission, which avoids the eNB mis-interpreting the ACK/NACK bundle, and is the behaviour currently specified in LTE. Alternatively the UE may be able to set the ACK/NACK bit(s) corresponding to missing DCI(s) to "NACK", even if one or more of the DL assignments has been lost. It will be noted that after bundling, each bit of the ACK/NACK refers to more than one transport block so that if one transport block is received in error (or the corresponding DCI missed), the corresponding bit should be set to NACK even if the other transport blocks have been received correctly.

In addition to being included in the DCI, DAI can also be conveyed in UL grants, which adds robustness.

In LTE FDD, currently there is no need to employ DAI because there is a one-to-one mapping between the subframe in which data is received and the subframe in which ACK/NACK are transmitted. However, if this restriction did not apply in future, DAI could also be applied for FDD in a similar way to TDD.

To summarise the above, in LTE-A two downlink control channels are defined (PDCCH and EPDCCH) which can be used to transmit control messages to UEs. Typically the control messages contain DCI (Downlink Control Information) and are used to indicate resources and other information concerning downlink data transmissions from the network on PDSCH ("DL assignments"), or uplink data transmissions which can be made by a UE on PUSCH. Usually one DCI is relevant for one UE, for one carrier frequency and for one subframe.

Typically the UE is configured, in every downlink subframe, to attempt reception of a number of different candidate messages which might be transmitted on a control channel, and usually each candidate would be associated with different control channel resources. The UE can detect correct reception of a message (codeword) by checking the CRC and confirming that it is the intended recipient by the presence of a particular identity indication (for example a specific value of CRNTI). If the UE detects an uplink grant, it will make a corresponding transmission on PUSCH. If the UE detects a downlink assignment it will attempt to decode the corresponding downlink transmission on PDSCH, sending an ACK or NACK as appropriate, typically on the uplink control channel (PUCCH). In the case that PUSCH is transmitted on the uplink, the ACK/NACKs may be also sent on the PUSCH rather than the PUCCH.

In carrier aggregation (CA) multiple carriers at different frequencies may be configured for a terminal (via higher level RRC signalling), and these carriers may be activated or deactivated by higher layer MAC signalling. The UE may therefore be required to search for a set of control message candidates for each activated carrier. One carrier is permanently activated (the Primary Cell or PCell) and other configured carriers may be activated or deactivated (the secondary cells or SCells). In LTE the PCell and Scells are controlled by, and resources scheduled by, the same eNB. Using multiple input multiple output (MIMO) antenna techniques, spatial multiplexing can be used to send more than one data codeword to a UE using the same time/frequency resources. In LTE the multiple ACK/NACKs for multiple codewords received at the same time (same subframe) can be transmitted in the same uplink message, whether the codewords were sent by spatial multiplexing or on multiple carriers, or both.

In the case of multiple DL assignments indicating PDSCH transmissions in a given subframe, the UE will acknowledge reception by transmitting the corresponding ACK/NACKs on the PCell. The number of ACK/NACK bits generated per subframe is fixed according to the number of CCs configured and the maximum number of transport blocks (i.e. data codewords or packets) which may be received on each CC simultaneously. Currently in LTE the number of ACK/NACK bits transmitted using a given message format is not dependent on the number of CCs activated to the UE or the number of codewords received, although such possibilities have been considered by 3GPP.

Downlink control messages in LTE (such as those scheduling downlink transmissions), are considered to contain DCI (Downlink Control Information). DCI scheduling of the resources for a given carrier may be transmitted on the same carrier ("self-scheduling") or a different carrier "cross-carrier scheduling"). Note that in LTE there is a significant probability that the UE may miss DCI messages (i.e. fail to detect and decode a DCI message intended for the UE).

In LTE TDD the ACK/NACKs for codewords received in more than one subframe can be sent in the same uplink message. This means that there could be more ACK/NACKs to send in one subframe than the total corresponding to the number of transport blocks that could be sent on the activated or configured CCs. In such cases, so-called downlink assignment information (DAI) may be used for "bundling" of ACK/NACKs, where a given ACK/NACK bit is used to indicate correct reception (or otherwise) of multiple codewords.

For a two bit DAI field, operated as a counter incremented for each successive DCI, then up to three successive lost DCI messages can be correctly detected (that is, the fact that there are lost messages, and the number of lost messages up to three, can be determined). There is a known potential ambiguity if the last DCI in a sequence of DL assignments is lost, since this loss cannot be detected by observing the sequence of DCIs in the DL assignments (without additional information such as DAI in an UL grant). This is because the UE will only expect DCIs for activated CCs, but not every activated CC will have a DCI in every subframe (for example if there is temporarily a shortage of data for transmission to the UE).

3GPP RAN1 is currently discussing extensions to CA where the maximum number of carriers that are supported will be increased from 5 to 32.

For each CC on which PDSCH is transmitted to a UE, each DL assignment will be indicated by a corresponding DCI message. For a large number of CCs configured (i.e. more than 5) to avoid excessive transmission overhead, it is desirable that the number of ACK/NACK bits actually transmitted is based on the number DCI messages containing DL assignments (i.e. number of CCs actually used) rather than the number of CCs configured to the UE (which is the current case for up to 5 CCs).

However, for the typically envisaged solutions for more than 5 CCs, in order that the eNB can correctly interpret the UE ACK/NACK transmission, it is preferable that both eNB and UE have the same understanding of the number of DCIs transmitted (which may be different from the number of DCIs detected by the UE). The design target for probability of loss of a DCI message is less than 1%, but in some cases it might be higher. So particularly when a large number of CCs are used in the DL for given UE, the probability that at least one of the corresponding DCI messages is lost in a given subframe may be quite significant. Since the ACK/NACK bits (at least for more than a small number of CCs) would be sent in a single message, if a DCI loss is undetected this is likely to result in incorrect reception or erroneous interpretation of many or all of the ACK/NACK bits. This in turn would lead to re-transmission of transport blocks for which this is not required, or no re-transmission where it is required, even for CCs with correctly received DCIs, with a consequent impact on data throughput and system performance.

In addition to both eNB and UE knowing the number of ACK/NACK bits which are to be transmitted, it is also necessary that, after bundling, a bit indicating ACK is associated with one or more correctly received transport blocks (e.g. by the correct mapping to corresponding information bits in the ACK/NACK message). This means that as well as the number of missed DCIs, some information of the identity of missed DCIs is also needed at the UE.

Solutions proposed to date to the problem of achieving a common understanding between eNB and UE on the number and identity of ACK/NACK bits which should be transmitted include the following:-

* Use, as the basis of ACK/NACK reporting by the UE, the configured number of CCs (as is currently the case in LTE). This number can be changed by semi-static RRC signalling, but not quickly enough to adapt to fast changes in data rate, resulting from UE demands such as beginning to stream a video or the like.

* Use the number of activated CCs instead of the configured number of CCs. This can be changed more quickly than the number of configured CCs (using MAC signalling) but is still not fast enough to follow changes in data rate, which may vary significantly from one subframe to the next.

* Send the UE an explicit indication (e.g. the number of CCs and/or identities of CCs with DCI carrying DL assignments in a given subframe). This could be done using a special DCI message per subframe (e.g. with a bit-map of used CCs), at the cost of increased signalling overhead.

\* Send the UE an explicit indication of the number of ACK/NACK bits to be sent and/or the message format to be used. This could be done using a special DCI message per subframe, which again increases the signalling overhead.

None of the above solutions is free of drawbacks. Consequently, there is a need to improve the existing DAI scheme for use in CA. More generally, there is a need to improve the ability of terminals to detect that one or more control messages within a sequence of control messages are missing and to notify a base station accordingly, and/or allow appropriate UE behaviour.

**Summary of the Invention**

According to a first aspect of the present invention, there is provided a wireless communication method comprising, at a transmitter:

determining a number of control messages, the control messages meeting at least one criterion and for transmission in a sequence to a receiver; and
associating sequence information with each control message in the sequence, the sequence information differing between successive control messages; wherein
the associating takes into account said number of control messages so that first sequence information, associated with control messages in a first sequence, is distinguishable from second sequence information, associated with control messages in a second sequence having a number of control messages different from said first sequence.

By "meeting at least one criterion", the control messages can be considered together for purposes of the present invention, for example as control messages of a particular type such as downlink control information. The sequence of control messages is transmitted to the receiver.
Here "associated with" means that sequence information is also transmitted to the receiver, usually but not necessarily (or not necessarily exclusively) by being attached to the control messages.
The "sequence information" is for example a number which, by differing (taking a different value) between successive control messages, provides an indication of the position of a control message within the sequence.
Preferably, the receiver is configured for wireless communication via a plurality of carriers and each control message relates to a respective carrier.
The determining may comprise determining control messages which meet any one or more of the following criteria:

transmitted within a defined time window;
received within a defined time window;
for downlink scheduling;
transmitted with a particular message format;
transmitted via a particular channel.

In the case of the control messages being for downlink scheduling, and when wireless communication is scheduled within frames each consisting of a succession of subframes, the downlink scheduling preferably relates to the same subframe.
In any method as defined above, in each sequence, the successive control messages of each sequence may be successive either in the time domain or in the frequency domain.
Preferably, the first sequence contains an odd number of control messages and the second sequence contains an even number of control messages.
The sequence information may comprise numerical values, the first sequence information being distinguishable from the second sequence information by their respective numerical progressions of the numerical values.
In this case, preferably, the numerical progressions of the first and second sequence information are given by:

$$SQI(i) = f(i,c) \bmod n$$

where

SQI is a numerical value in the sequence information;
i identifies the control message in the sequence of control messages;

c is the determined number of control messages in the sequence;
f(i,c) is a function of i and c; and
n is the number of different numerical values possible in the sequence information.

In a more specific embodiment,

$$f(i,c) = i *(2*(c \bmod 2) - 1)$$

whereby the first sequence information includes a series of incrementing numerical values, and the second sequence information includes a series of decrementing numerical values.

Alternatively, in another embodiment f(i,c) may be given by:

$$f(i,c) = i *(2*(c \bmod 2) - 1) + c \bmod 2.$$

Preferably, in a case where each control message relates to a respective carrier and the control messages are for downlink scheduling in the same subframe with the first and second sequence information comprising distinguishable numerical progressions, the numerical value in the sequence information for a first said carrier in the current subframe is incremented with respect to the numerical value for that carrier in the previous subframe, and the numerical values of the sequence information for successive carriers in the current subframe are incremented or decremented depending on the number of carriers scheduled in the current subframe.

Any method as referred to above may further comprise, at the receiver:

receiving control messages and associated sequence information from the transmitter;
making a determination, on the basis of the sequence information, whether at least one control message in the sequence has been missed and how many control messages have been missed; and
notifying the determination to the transmitter.

Any method as referred to above may be applied to an LTE-based wireless communication system. In this case the transmitter may be a base station and the receiver may be a terminal in the LTE-based wireless communication system; the control messages may be downlink control information (DCI), and the sequence information may be a downlink assignment index (DAI).

In particular, an embodiment of the present invention may be advantageously applied to LTE TDD. However, it may also conceivably be applied to LTE FDD or to mixed TDD/FDD implementations.

Embodiments of the present invention are based on the idea of transmitting a sequence of control messages, where the total number of control messages in the sequence is known in advance at the transmitter, and associating a sequence number from a plurality of possible sequence numbers with each of the sequence of control messages, where the sequence number differs between successive control messages, and where more than one of the sequence numbers associated with each of the sequence of control messages depends on the total number of control messages in the sequence.

The present invention is of particular (but not exclusive) application to LTE, and for example can be applied to DCI and DAI. That is, in place of the previously-proposed solutions just mentioned in the introduction, an embodiment of the present invention adapts the DAI mechanism as applied when transmitting ACK/NACKs from multiple subframes in a single subframe, and applies the same mechanism directly to a sequence of DL assignments in the frequency domain in CA, to enable the UE to detect and take into account missed DCI messages when determining the number of ACK/NACK bits to be sent.

Other embodiments of the present invention are based on the idea of (in addition to, or instead of the above idea), transmitting a sequence of control messages, where the intended total number of control messages in the sequence is determined in advance at the transmitter, and allowing the receiver to know information about this total number of control messages either by explicit signalling or by inference.

Thus, according to a second aspect of the present invention, there is provided a wireless communication method comprising, at a transmitter:

determining a number of control messages intended to be transmitted in a sequence to a receiver, the control messages meeting at least one criterion; and
indicating to the receiver whether the determined number of control messages is even or odd.

According to a third aspect of the present invention, there is provided a wireless transmitter for transmitting control messages to a receiver and arranged to:

determine a number of the control messages, the control messages meeting at least one criterion and for transmission in a sequence to the receiver; and

associate sequence information with each control message in the sequence, the sequence information differing between successive control messages; wherein

the associating takes into account said number of control messages so that first sequence information, associated with control messages in a first sequence, is distinguishable from second sequence information, associated with control messages in a second sequence having a number of control messages different from said first sequence.

According to a fourth aspect of the present invention, there is provided a wireless receiver arranged to:

receive, from a transmitter, a number of control messages, the control messages meeting at least one criterion and transmitted in a sequence to the receiver; wherein

sequence information is associated with each control message in the sequence, the sequence information differing between successive control messages, the association of sequence information with control messages taking into account said number of control messages so that first sequence information, associated with control messages in a first sequence, is distinguishable from second sequence information, associated with control messages in a second sequence having a number of control messages different from said first sequence.

This receiver may be further arranged to form a list of values of the the sequence information associated with each control message in the sequence, identify whether the list follows a progression associated with an even or odd number of control messages, and identify whether the number of control messages is even or odd, and send an acknowledgement message to the transmitter on the basis of results of the identifying.

Further, the receiver may be additionally arranged to check whether values are missing from the list on the basis of the progression, and insert any missing values into the list; and in said identifying, add a value at the end of the list if the progression does not match the number of control messages, wherein any inserted or added value represents an undetected control message.

According to a fifth aspect of the present invention, there is provided a wireless communication system comprising the above-defined transmitter and receiver.

A further aspect relates to software for allowing transceiver equipment equipped with a processor to provide a transmitter (e.g., base station) or a receiver (e.g., terminal) as defined above. Such software may be recorded on a computer-readable medium.

As already mentioned, the above mentioned control messages may be downlink control information (DCI) messages relating to packets transmitted on some or all of activated carrier frequencies in a given subframe, and the sequence information in successive control messages may be a downlink assignment indicator (DAI). Thus, embodiments of the present invention involve, in a system such as LTE, attaching DAI in the form of, for example, a two bit sequence number to each of these DCI messages. The sequence number is incremented or decremented for each DCI transmitted depending on whether the total number of DCI message transmitted in a given subframe is even or odd. That is, the sequence number is increased for an even number of control messages and decreased for an odd number (or vice versa).

The invention allows detection of the loss of any three successive DCI (not including the last DCI in a sequence). A specific improvement over the prior art is that the loss of the last DCI in the sequence can also be detected without adding any more bits. This allows a more accurate and reliable common understanding between the transmitter and receiver concerning the number of DC messages transmitted. This is useful, for example, if the format of transmission of ACK/NACK information relating to the DCI messages depends on the number of messages transmitted, since the most likely cases of failed detection of a DCI message can be detected, notified to the eNB, and corrected.

In this way, when applied to DCI in LTE, the present invention allows a UE to make better use of received DCIs by improving the UE's knowledge of how many DCIs (and corresponding transport blocks) have been missed.

In general, and unless there is a clear intention to the contrary, features described with respect to one aspect of the invention may be applied equally and in any combination to any other aspect, even if such a combination is not explicitly mentioned or described herein.

As is evident from the foregoing, the present invention involves signal transmissions between a transmitter and receiver in a wireless communication system. Typically, but not necessarily exclusively, the transmitter is base station equipment and the receiver is a terminal. The term "base station equipment" refers to equipment providing or at least controlling one or more base stations, which can include for example the arrangement shown in Figure 1 with an eNB 11 controlling separate base stations 21 to 2n. It is envisaged that the base station equipment will usually take a form proposed for implementation in the 3GPP LTE and 3GPP LTE-A groups of standards, and may therefore include an eNB (which term also embraces Home eNB or HeNB) as appropriate in different situations. However, subject to the functional requirements of the invention, the base station equipment may take any other form suitable for transmitting signals to, and receiving signals from terminals.

Similarly, in the present invention, each terminal may take any form suitable for receiving signals from, and transmitting signals to, base station equipment. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

**Brief Description of the Drawings**

Reference is made, by way of example only, to the accompanying drawings in which:

Figure 1 illustrates a wireless communication system employing carrier aggregation (CA);
Figure 2 illustrates channels at each of a plurality of protocol layers in LTE;
Figure 3 shows how LTE physical channels are allocated to a PCell and SCell;
Figure 4 is a flowchart of a process performed at a transmitter in embodiments of the present invention;
Figure 5 is a flowchart of a process performed at a receiver in embodiments of the present invention;
Figure 6 illustrates functional blocks of a terminal (UE) which may be employed in embodiments of the present invention; and
Figure 7 illustrates functional blocks of base station equipment (eNB) which may be employed in embodiments of the present invention.

**Detailed Description**

To recap some of the most relevant features from the introduction, a UE can receive a DL assignment with respect to any CC activated for that UE. The DL assignment is conveyed to the UE by a DCI message. Each DCI is transmitted on PDCCH or EPDDCH, and indicates the presence of one or more transport blocks on PDSCH, transmitted via a specific CC. The UE sends ACK/NACK for each received transport block of which it is notified via a DCI message. However, in LTE TDD "bundling" is required to fit the ACK/NACKs of a plurality of subframes with respect to the same CC, within the available number of bits in one subframe. The ACK/NACKs to be sent in the case of bundling are partly governed by downlink assignment information (DAI) informed to the UE by the eNB.

The existing DAI can be viewed as a sequence number for a single CC which is incremented in a subframe where a DL assignment is transmitted to the UE. The DAI value is included in the DCI.

Table 1: 2 bit DAI in LTE TDD

| Number of successive subframes covered by a given ACK/NACK message and with a DCI | Sequence of 2 bit DAI values (binary) | Sequence of 2 bit DAI values (decimal) | Most likely uncorrectable pattern of missed DCIs (where X indicates a missed DCI) | Approximate probability of occurrence of most likely uncorrectable pattern of missed DCIs |
|---|---|---|---|---|
| 4 | 00,01,10,11 | 0,1,2,3 | D,D,D,X | 0.01 |
| 5 | 00,01,10,11,00 | 0,1,2,3,0 | D,D,D,D,X | 0.01 |
| 6 | 00,01,10,11,00,01 | 0,1,2,3,0,1 | D,D,D,D,D,X | 0.01 |
| 7 | 00,01,10,11,00,01,10 | 0,1,2,3,0,1,2 | D,D,D,D,D,D,X | 0.01 |

As a an example, if in given a set of subframes the UE receives a sequence of DAI values [0,1,2,0,1] with respect to a given carrier, it can deduce that at least one DCI has been missed. The shortest possible transmitted sequence that could have been sent is [0,1,2,3,0,1]. In general the UE can detect and correct any sequences of up to 3 missed DCI in succession. A special case is where the last DCI of a sequence is missed (indicated by "X" in Table 1), and the UE would not be able to identify this. Note that the UE also knows the number of subframes that have elapsed and this information can help in the correction process, but for simplicity this aspect is not considered in the above example.

Assuming that the probability of a failing to detect a DCI message is fixed, and corresponds to some process which is uniform and uncorrelated between subframes and CCs, we can ascribe this a value such as p=0.01 as a typical design assumption. Then we can approximate the probability of occurrence of missing only the last DCI in a sequence as being approximately p also (as an illustration of this, for 4 subframes each with a DCI, the probability of three correct DCIs followed by one missed DCI would be P = (1-p)(1-p)(1-p)p = 0.99x0.99x0.99x0.01 which is approximately 0.01).

This case is the uncorrectable pattern with the smallest number of missed DCI. All the other uncorrectable patterns contain more missed DCI and so are much less likely. Thus the probability that a given sequence of DCI has one or more missing DCI, and cannot be corrected is also about p (i.e. about 0.01).

Note that here we consider a pattern of missed DCI to be "correctable" if at least the correct number of DL assignments can be identified (even if it might not be possible to deduce exactly which assignments were lost). It will be understood that the missed DCI are correctable in the sense that the eNB can be notified of the problem, allowing the DCI in question to be retransmitted.

A mechanism to detect loss of the last DCI in a sequence is proposed in 3GPP R1-152569 HARQ-ACK transmission for up to 32 CCs, CATT, 3GPP TSG-RAN WG1 Meeting #81 Fukuoka, Japan, 25th - 29th May 2015.

An additional bit is added to the DAI field and set to "1" for the last DCI in a time-domain sequence (otherwise set to "0"). This solves the problem, but at the cost of an additional bit of overhead per DCI.

The invention is based on the recognition that in LTE CA the total number of DCIs transmitted to a UE on different CCs in a subframe is known at the transmitter. This information can be used to improve the robustness of the DAI scheme particularly (but not necessarily exclusively) for TDD with multiple carriers. In contrast, the number of packets (i.e., transport blocks for which there is corresponding DCI, but sent on a different channel from the DCI) to be transmitted in successive subframes in the time domain is not necessarily known in advance.

In the prior art, the DAI value in a given DCI depends on the DAI in the previous DCI message.

In this invention, the DAI value also depends on the total number of DCI messages in a sequence of DCI messages (currently in LTE, this relates to DCIs in a subframe). Thus, in general the sequence of DAI values attached to successive DCIs in the frequency domain depends on the number of DCIs transmitted to the UE in that subframe. Note that here, whether DCIs are successive in the frequency domain refers to the resources (e.g. CCs) to which the DCI refer, which may or may not be the same as the frequency relationship of the transmitted DCI themselves. More generally, the ordering need not be in terms of frequency provide that the UE and eNB have a common understanding of the order.

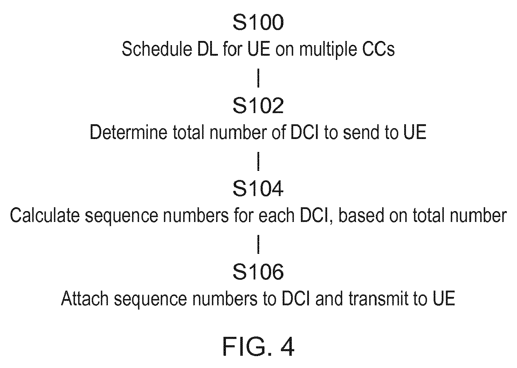

The basic process as performed at the transmitter (base station) is shown in Figure 4.

Step S100 is a step of scheduling the downlink for a given UE in a given subframe, using a plurality of CCs configured for the UE.

In S102 the base station determines how many DCI (control messages) in total are needed to inform the UE of the DL assignment.

S104 is to calculate sequence numbers for each DCI, based on the total number of DCI just determined and in any of the ways described below in various embodiments.

In step S106 the base station attaches the sequence numbers to DCI and transmits the resulting control messages to the UE. The process is repeated for the next subframe in which the base station has a DL assignment for the UE on any of the CCs.

First embodiment

A first embodiment is based on LTE where a two bit DAI field is included in each DCI. For a set of ordered carriers in respect of which DCI is transmitted (which may be, but is not necessary, the same as the set of carriers on which DCI are transmitted), the DAI field is set to zero for the DCI on first carrier and incremented for successive DCIs, if the total number of DCIs is even, and decremented if the total number DCIs is odd (or in a variation vice-versa). The ordering of the set of carriers may be based on frequency, but this is not essential. This is effective in detecting missed DCIs for sequences of 4 DCI or more.

Some examples of the DAI sequences for first embodiment are shown in Table 2. It will be noted that, in contrast to Table 1 above, a set of carriers and not just one carrier is being considered here.

Table 2: Improved 2 bit DAI for LTE CA (Counter decremented for odd number of DCIs)

| Number of successive carriers covered by a given ACK/NACK message and with a corresponding DCI | Sequence of 2-bit DAI values (binary) | Sequence of 2-bit DAI values (decimal) | Most likely uncorrectable pattern of missed DCIs (where X indicates a missed DCI) | Approximate probability of occurrence of most likely uncorrectable pattern of missed DCIs |
|---|---|---|---|---|
| 4 | 00,01,10,11 | 0,1,2,3 | D,D,X,X | 0.0001 |

(continued)

| Number of successive carriers covered by a given ACK/NACK message and with a corresponding DCI | Sequence of 2-bit DAI values (binary) | Sequence of 2-bit DAI values (decimal) | Most likely uncorrectable pattern of missed DCIs (where X indicates a missed DCI) | Approximate probability of occurrence of most likely uncorrectable pattern of missed DCIs |
|---|---|---|---|---|
| 5 | 00,11,10,01,00 | 0,3,2,1,0 | D,D,D,X,X | 0.0001 |
| 6 | 00,01,10,11,00,01 | 0,1,2,3,0,1 | D,D,D,D,X,X | 0.0001 |
| 7 | 00,11,10,01,00,11,10 | 0,3,2,1,0,3,2 | D,D,D,D,D,X,X | 0.0001 |

In this case the uncorrectable pattern with the smallest number of missed DCI occurs when the last two DCI in a sequence are missed. All the other uncorrectable patterns contain more missed DCI and so are much less likely. Referring back to Table 1, the probability p of failing to detect one DCI message is assumed to be 0.01. Thus the probability that a given sequence of DCI has two or more missing DCI, and cannot be corrected is also about $p^2$ (i.e. about 0.0001).

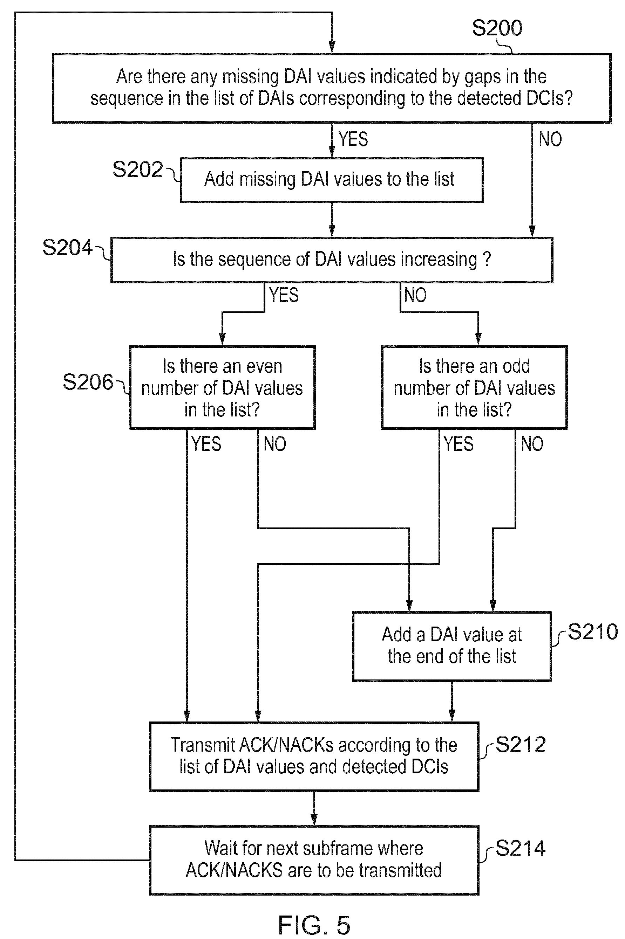

Figure 5 shows a flowchart of steps performed at the UE in this embodiment. In step S200, the UE receives the control messages from the base station in which DCI have sequence information attached in the form of the 2-bit DAI values, and obtains a list of DAI values from the corresponding detected DCIs. The UE checks whether any DAI values are missing from the sequence in the list, which the UE can judge by comparing the DAI values with the sequences in Table 2. If no DAI value is found to be missing (S200, NO) the UE proceeds to step S204. If a missing DAI value is detected, in S202 the UE adds the missing DAI value or values to the* list In step S204 the UE checks whether the progression of DAI values is increasing (incrementing). If so (S204, YES) the UE checks in S206 whether there is an even number of DAI values in the list. In the latter case (S204, NO) the UE checks in step S208 whether there is an odd number of DAI values in the list. In S206 and S208, if the check is positive (there is indeed an even or odd number of DAI values respectively) the flow proceeds to step S212. Otherwise (S206, NO or S208, NO) the UE adds a DAI value at the end of the list of DAI values in step S210 before proceeding to S212. In step S212, the UE takes into account the detected DCIs and the list of DAI values (including the DAIs missing from the sequence, which correspond to undetected DCIs) and sends the appropriate ACK/NACKs to the eNB. In step S214 the UE waits until a new set of ACK/NACKs need to be transmitted and the process then returns to the start.

It should be noted that in the above procedure, when missing values are added to the list they can be marked in some way so that the DAIs actually received can be distinguished from those which are detected as missing.

In one variation of this embodiment, the UE sends a NACK for each transport block assumed by the UE to be scheduled by the DCI which the UE deduces to be undetected. In order that the eNB and UE have a common understanding, the UE may assume a number of ACK/NACK bits sent per DCI (detected or undetected) which is equal to the maximum number of transport blocks which can be scheduled per DCI according to the UE configuration. For LTE this maximum value may be up to two.

In another variation of this embodiment, the UE may drop the ACK/NACK message completely if any DCIs are found to be missed. The UE may also drop the ACK/NACK message in error cases such as if it is possible to detect that DCI have been missed but not possible to reliably deduce how many have been missed.

Second embodiment

A second embodiment is like the first embodiment except that the two bits making up the DAI are treated separately. The most significant bit follows the sequence (0,0,1,1,0,0,1,1,0,0........) while the least significant bit follows an alternating sequence such that the value of the bit for the last DCI in a sequence of DCIs is always "1". In effect, this involves the eNB determining which is the last DCI in the sequence and setting its second bit to "1", then working backwards to set the second bit for each preceding DCI in the sequence.

Table 3: Improved 2 bit DAI for LTE CA (Value of the LSB in the last DAI is always "1")

| Number of successive carriers covered by a given ACK/NACK message and with a corresponding DCI | Sequence of 2-bit DAI values (binary) | Sequence of 2-bit DAI values (decimal) | Most likely uncorrectable pattern of missed DCIs (where X indicates a missed DCI) | Approximate probability of occurrence of most likely uncorrectable pattern of missed DCIs |
|---|---|---|---|---|
| 4 | 00,01,10,11 | 0,1,2,3 | D,D,X,X | 0.0001 |
| 5 | 01,00,11,10,01 | 1,0,3,2,1 | D,D,D,X,X | 0.0001 |
| 6 | 00,01,10,11,00,01 | 0,1,2,3,0,1 | D,D,D,D,X,X | 0.0001 |
| 7 | 01,00,11,10,01,00,11 | 1,0,3,2,1,0,3 | D,D,D,D,D,X,X | 0.0001 |

Third embodiment

A third embodiment is like the first embodiment but more general, where the DAI value is given by:-

$$DAI(i) = f(i,c) \bmod n$$

where

i identifies the DCI in the sequence of DCIs
c is the total number of DCIs in the sequence
f(i,c) is a function of i and c
n is the number of different DAI values

For the first embodiment $f(i,c) = i*(21*(c \bmod 2)-1)$
For the second embodiment $f(i,c) = i*(21*(c \bmod 2)-1) + c \bmod 2$

Fourth embodiment

A fourth embodiment is like the first embodiment, but adapted for the case where ACK/NACKs for multiple subframes are transmitted in one subframe. In this case in each successive subframe with PDSCH scheduled by DCI, the DAI for the first CC with a DL assignment is incremented with respect to the value in the previous subframe (similar to the prior art for a single carrier). The DAIs for successive CCs is in a given subframe are also incremented, or decremented, depending on the total number of CCs assigned in that subframe. The initial value of the DAI in the first subframe for the first scheduled CC should be set to a predetermined value (e.g. zero), so that transmitter and receiver have a common understanding.

Table 4: Example of transmitted DAI values for CA applied to TDD for the fourth embodiment

| | | Subframe number | | | | |
|---|---|---|---|---|---|---|
| | | 1 | 2 | 3 | 4 | 5 |
| **Carrier number** | **1** | 0 | 1 | | | 0 |
| | **2** | 1 | 3 | 2 | | 1 |
| | **3** | 2 | 2 | | 3 | |
| | **4** | 3 | | | 0 | |
| Comments | | Number of CCs scheduled is even, DAI incremented per CC. Initial value of DAI is zero | Number of CCs scheduled is odd, DAI decremented per CC. DAI for first CC incremented in time domain | Only one CC scheduled, DAI still incremented in time domain | Only two CCs scheduled, DAI incremented in time and frequency domains | Only two CCs scheduled, DAI incremented in time and frequency domains |

In the example in Table 4, if any single DL assignment is lost, this can be identified (except for the assignment for CC 2 in subframe 5).

Fifth embodiment

The fifth embodiment is similar to the fourth embodiment, except that the receiver is informed by explicit signalling whether the total number of successive subframes with DCI is even or odd. The signalling may be by higher layers (i.e. RRC or MAC signalling in LTE) or by physical layer signalling (e.g. in DCI). If the number of successive subframes with transmitted DCIs is in accordance with the signalling, then it can be detected whether the DCI(s) in the last subframe are missed or not, since missing the last DCI(s) would change the number of subframes from odd to even (or vice versa). If the number of successive subframes with DCI is not in accordance with the signalling (e.g. if the transmitter chooses a different scheduling scheme at the last minute), and the DCI(s) in the last subframe are received, then the receiver would deduce that there should have been an additional subframe with DCIs, and an appropriate response would be to transmit additional NACK(s) for this subframe. This will not lead to any major problem, since such a response can be anticipated for reception of the ACK/NACK message. Thus any information provided to the receiver about the number of subframes containing DCI (or DCI of a particular type) can be treated as an assumption to be used in subsequent processing such as determining the contents of an ACK/NACK message.

Sixth embodiment

The sixth embodiment is like the fifth embodiment except that whether the total number of successive subframes with DCI is even or odd is indicated implicitly. For example, in LTE TDD this could be determined by the subframe configuration on a given carrier (i.e. which subframes in a frame are allocated for uplink and which for downlink). Some subframe configurations could be associated with an odd number of subframes containing DCI and other subframe configurations could be associated with an even number of subframes containing DCI, and yet other subframe configurations could be associated with no particular number of subframes containing DCI.

Alternatively, for any given ACK/NACK message, the number of subframes containing DCI for which the ACK/NACK message would convey a response could be assumed by the receiver to be odd or even according to whether the maximum possible number of such subframes is odd or even.

It should be noted that the fifth and sixth embodiments can be applied to TDD without carrier aggregation. Variations of these embodiments can be applied to carrier aggregation where the information provided to the receiver is about the number of DCI in a sequence of DCI on successive carriers in the frequency domain. Also, versions of the fifth and sixth embodiments can be applied in addition to, or independently of the other embodiments.

When used in addition to the fourth embodiment, the example in Table 4 can still apply, but with appropriate signalling the UE will be able to identify if everything in subframe 5 was lost, for example.

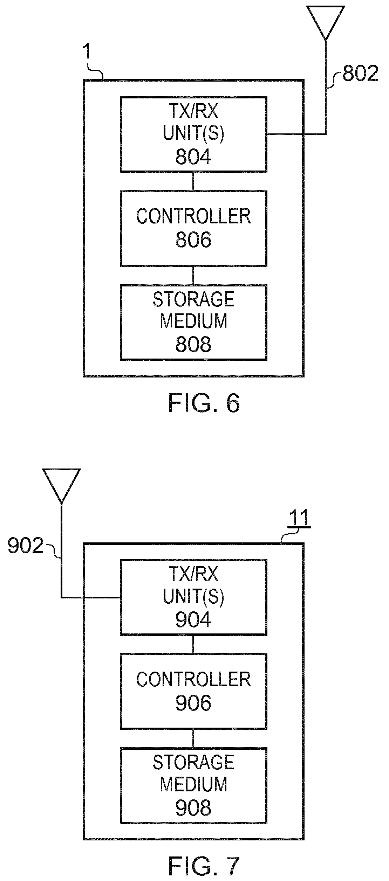

Figure 6 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, for example to detect and identify missing DAI values in the manner shown in Figure 5. For example, the various functions described above may be embodied in the form of a computer program stored in the storage medium 808 and executed by the controller 806. The transmission/reception unit 804 is arranged, under control of the controller 806, to receive control messages from the cells and send ACK/NACK and so forth as discussed previously.

Figure 7 is a block diagram illustrating an example of equipment suitable for use as an eNB 11 and at least one of the base stations 21, 22, ... 2n referred to above (and connected by high-speed backhaul to any other of the base stations). It includes transmitter/receiver unit(s) 904 connected to at least one antenna 902 (together defining a communication unit) and a controller 906. The controller may be, for example, a microprocessor, DSP, ASIC, FPGA, or other logic circuitry programmed or otherwise configured to perform the various functions described above, including scheduling a DL assignment for each UE and constructing DCI accordingly, including forming sequence information such as the DAI values shown in Tables 2 to 4. For example, the various functions described above may be embodied in the form of a computer program stored in the storage medium 908 and executed by the controller 906. The transmission/reception unit 904 is responsible for transmission of the control messages and so on under control of the controller 906. The controller 906 not only manages any integrated base station such as 21 in Figure 1 but also manages any separate base stations not directly controlled by the base station equipment.

Thus, to summarise, an embodiment of the present invention may provide that in a system such as LTE, a two bit sequence number or downlink assignment indicator (DAI) can be attached to downlink control information (DCI) messages relating to packets transmitted on some or all of activated carrier frequencies in a given subframe. The sequence number is incremented or decremented for each DCI transmitted depending on whether the total number of DCI message transmitted in a given subframe is even or odd.

The received sequence of DAI values can be used to detect at least some cases of false detection of DCI messages (e.g. when a DCI message is detected by the UE where none was transmitted). For example if a DCI is received with a DAI that does not fit in the sequence it can be rejected.

Various modifications are possible within the scope of the present invention.

The invention is not limited to DAI with 2 bits, and can be applied with more than two bits. Similarly the invention is not limited to the example cases or sequence lengths shown in Tables 2 to 4.

Whilst embodiments have been described with respect to DCI, this is not the only possibility. More generally the present invention can be applied to control messages of any particular type, in other words which share one or more criteria such as:

> transmitted within a defined time window;
> received within a defined time window;
> for downlink scheduling;
> transmitted with a particular message format;
> transmitted via a particular channel.

Any of the embodiments and variations mentioned above may be combined in the same system. Whilst the above description has been made with respect to LTE and LTE-A, the present invention may have application to other kinds of wireless communication system also. Accordingly, references in the claims to "terminal" are intended to cover any kind of subscriber station, mobile device, MTC device and the like and are not restricted to the UE of LTE.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

**Industrial Applicability**

In a wireless communication system where sequences of control messages such as DCI are sent between a transmitter and receiver, embodiments of the present invention allow detection of the loss of any of up to three successive control messages (not including the last two or three messages). A specific improvement over the prior art is that the loss of the last message (DCI) in the sequence can also be detected without adding any more bits than required by the prior art. This allows a more accurate and reliable common understanding between the transmitter and receiver concerning the number of control messages transmitted. This is useful, for example, if the format of transmission of ACK/NACK information relating to the messages depends on the number of messages transmitted, since all the most likely cases of failed detection of a control message can be detected and corrected.

**Claims**

1. A wireless communication method comprising, at a transmitter:

> determining a number of control messages, the control messages meeting at least one criterion and for transmission in a sequence to a receiver; and
> associating sequence information with each control message in the sequence, the sequence information differing between successive control messages; wherein

the associating takes into account said number of control messages so that first sequence information, associated with control messages in a first sequence, is distinguishable from second sequence information, associated with control messages in a second sequence having a number of control messages different from said first sequence.

**2.** The method according to claim 1 wherein the receiver is configured for wireless communication via a plurality of carriers and each control message relates to a respective carrier.

**3.** The method according to claim 1 or 2 wherein the at least one criterion employed in said determining comprises one or more of:

the control message is transmitted within a defined time window;
the control message is received within a defined time window;
the control message is for downlink scheduling;
the control message is transmitted with a particular message format;
the control message is transmitted via a particular channel.

**4.** The method according to claim 3 wherein wireless communication is scheduled within frames each consisting of a succession of subframes, and wherein the at least one criterion comprises that the control message is for downlink scheduling relating to the same subframe.

**5.** The method according to any preceding claim wherein the sequence information comprises numerical values, the first sequence information being distinguishable from the second sequence information by their respective numerical progressions of the numerical values.

**6.** The method according to claim 5 wherein the numerical progressions of the first and second sequence information are given by:

$$SQI(i) = f(i,c) \bmod n$$

where

SQI is a numerical value in the sequence information;
i identifies the control message in the sequence of control messages ;
c is the determined number of control messages in the sequence;
f(i,c) is a function of i and c; and
n is the number of different numerical values possible in the sequence information.

**7.** The method according to claim 6 wherein

$$f(i,c) = i *(2*(c \bmod 2) - 1)$$

whereby the first sequence information includes a series of incrementing numerical values, and the second sequence information includes a series of decrementing numerical values.

**8.** The method according to claim 6 wherein

$$f(i,c) = i *(2*(c \bmod 2) - 1) + c \bmod 2$$

**9.** The method according to claims 2, 4 and 5 in combination, wherein the numerical value in the sequence information for a first said carrier in the current subframe is incremented with respect to the numerical value for that carrier in the previous subframe, and the numerical values of the sequence information for successive carriers in the current subframe are incremented or decremented depending on the number of carriers scheduled in the current subframe.

**10.** The method according to claim 9 wherein the receiver has knowledge of whether the number of subframes in which the sequence of control messages is intended to be transmitted is odd or even by means of at least one of:

explicit signalling by the transmitter of whether the number of subframes is odd or even; and
the receiver inferring whether the number of subframes is odd or even from a subframe configuration of a given carrier, such as which subframes are used for uplink and which for downlink.

**11.** The method according to any preceding claim further comprising, at the receiver:

receiving control messages and associated sequence information from the transmitter;
making a determination, on the basis of the sequence information, whether at least one control message in the sequence has been missed and how many control messages have been missed; and
notifying the determination to the transmitter.

**12.** The method according to any preceding claim wherein:

the wireless communication method is applied to an LTE-based wireless communication system;
the transmitter is a base station and the receiver is a terminal in the wireless communication system;
the control messages are downlink control information and the sequence information is a downlink assignment index.

**13.** A wireless transmitter for transmitting control messages to a receiver and arranged to:

determine a number of the control messages, the control messages meeting at least one criterion and for transmission in a sequence to the receiver; and
associate sequence information with each control message in the sequence, the sequence information differing between successive control messages; wherein
the associating takes into account said number of control messages so that first sequence information, associated with control messages in a first sequence, is distinguishable from second sequence information, associated with control messages in a second sequence having a number of control messages different from said first sequence.

**14.** A wireless receiver arranged to:

receive, from a transmitter, a number of control messages, the control messages meeting at least one criterion and transmitted in a sequence to the receiver; wherein
sequence information is associated with each control message in the sequence, the sequence information differing between successive control messages, the association of sequence information with control messages taking into account said number of control messages so that first sequence information, associated with control messages in a first sequence, is distinguishable from second sequence information, associated with control messages in a second sequence having a number of control messages different from said first sequence.

**15.** A wireless communication system comprising the transmitter according to claim 13 and the receiver according to claim 14.

**21**

Base station 1

**11**

eNodeB

**22**

Base station 2

**2n**

Base station n

Carrier
frequency
f1

Carrier
frequency
f2

Carrier
frequency
fn

**1**

UE

FIG. 1

FIG. 2

FIG. 3

S100
Schedule DL for UE on multiple CCs
|
S102
Determine total number of DCI to send to UE
|
S104
Calculate sequence numbers for each DCI, based on total number
|
S106
Attach sequence numbers to DCI and transmit to UE

FIG. 4

S200

Are there any missing DAI values indicated by gaps in the sequence in the list of DAIs corresponding to the detected DCIs?

YES ↓          NO

S202 — Add missing DAI values to the list

S204 — Is the sequence of DAI values increasing ?

YES          NO

S206 — Is there an even number of DAI values in the list?

YES   NO

Is there an odd number of DAI values in the list?

YES   NO

Add a DAI value at the end of the list   S210

Transmit ACK/NACKs according to the list of DAI values and detected DCIs   S212

Wait for next subframe where ACK/NACKS are to be transmitted   S214

FIG. 5

EP 3 121 982 A1

FIG. 6

FIG. 7

## EUROPEAN SEARCH REPORT

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/280164 A1 (LUO XILIANG [US] ET AL) 17 November 2011 (2011-11-17) | 1-5, 10-15 | INV.<br>H04L1/00 |
| A | * paragraphs [0078] - [0080], [0083], [0085] - [0089], [0090] - [0092], [0094]; figures 7, 11, 12 * | 6-9 | ADD.<br>H04L1/14<br>H04L1/18 |
| | ----- | | |
| X | SAMSUNG: "DAI design for LTE-A TDD", 3GPP DRAFT; R1-102177, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>vol. RAN WG1, no. Beijing, china; 20100412, 6 April 2010 (2010-04-06), XP050419461,<br>[retrieved on 2010-04-06] | 1-5, 11-15 | |
| A | * Chapter 2 "Discussion"; sentences 13-20; figures 1, 2 *<br>* Chapter 3.1 "Direct extension of DAI design in LTE TDD" *<br>* Chapter 3.2 " New mechanism to design DAI in LTE-A TDD" * | 6-10 | |
| | ----- | | |
| | -/-- | | |

TECHNICAL FIELDS
SEARCHED (IPC)

H04L

The present search report has been drawn up for all claims

| Place of search | Date of completion of the search | Examiner |
|---|---|---|
| The Hague | 23 September 2016 | Konstantopoulou, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 16 16 1286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | FUJITSU: "Application of DAI to CA", 3GPP DRAFT; R1-154025 APPLICATION OF DAI TO CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001419, Retrieved from the Internet: URL:http://www.3gpp.org/ftp/Meetings_3GPP_SYNC/RAN1/Docs/ [retrieved on 2015-08-23] | 1-5,9, 11-15 | |
| A,P | * Chapter 2 "Discussion", Chapter 3.1 "Analysis of DAI schemes" * ----- | 6-8,10 | |
| X | US 2013/223300 A1 (YANG SUCK CHEL [KR] ET AL) 29 August 2013 (2013-08-29) | 1-6, 11-15 | |
| A | * paragraphs [0017], [0107] - [0115] * ----- | 7-10 | TECHNICAL FIELDS SEARCHED (IPC) |

The present search report has been drawn up for all claims

| Place of search | Date of completion of the search | Examiner |
|---|---|---|
| The Hague | 23 September 2016 | Konstantopoulou, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 16 1286

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2016

| Patent document cited in search report | | Publication date | Patent family member(s) | | Publication date |
|---|---|---|---|---|---|
| US 2011280164 | A1 | 17-11-2011 | CN | 102948109 A | 27-02-2013 |
| | | | EP | 2569893 A1 | 20-03-2013 |
| | | | JP | 5685644 B2 | 18-03-2015 |
| | | | JP | 2013526803 A | 24-06-2013 |
| | | | KR | 20130016371 A | 14-02-2013 |
| | | | US | 2011280164 A1 | 17-11-2011 |
| | | | WO | 2011143636 A1 | 17-11-2011 |
| US 2013223300 | A1 | 29-08-2013 | CN | 103229447 A | 31-07-2013 |
| | | | CN | 105450369 A | 30-03-2016 |
| | | | EP | 2661006 A2 | 06-11-2013 |
| | | | KR | 20130064118 A | 17-06-2013 |
| | | | US | 2013223300 A1 | 29-08-2013 |
| | | | US | 2015049655 A1 | 19-02-2015 |
| | | | US | 2016088612 A1 | 24-03-2016 |
| | | | WO | 2012091490 A2 | 05-07-2012 |

EPO FORM P0459

For more details about this annex : see Official Journal of the European Patent Office, No. 12/82

**EP 3 121 982 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TSG-RAN WG1,* 25 May 2015

26